# EUROPÄISCHE PATENTSCHRIFT

(11) **EP 2 758 154 B1**
(45) Veröffentlichungstag und Bekanntmachung des Hinweises auf die Patenterteilung: **09.01.2019**
(21) Anmeldenummer: 12762270.2
(22) Anmeldetag: 19.09.2012
(51) Int. Cl.: B01D 61/06, F04B 1/20

(54) **AKTIVER DRUCKINTENSIVIERER, UMKEHROSMOSE-ANLAGE UND DEREN VERWENDUNG**
ACTIVE PRESSURE INTENSIFIER, REVERSE OSMOSIS SYSTEM AND USE THEREOF
INTENSIFICATEUR DE PRESSION ACTIF, INSTALLATION D'OSMOSE INVERSE ET LEUR UTILISATION

(30) Priorität: 21.09.2011 DE 102011114093
(43) Veröffentlichungstag der Anmeldung: 30.07.2014
(73) Patentinhaber: Fraunhofer-Gesellschaft zur Förderung der angewandten Forschung e.V., 80686 München (DE)
(72) Erfinder: WENT, Joachim, 79100 Freiburg (DE); ANHALT, Joachim, 79102 Freiburg (DE)
(74) Vertreter: Pfenning, Meinig & Partner mbB
(86) Internationale Anmeldenummer: PCT/EP2012/068393
(87) Internationale Veröffentlichungsnummer: WO 2013/041547

(56) Entgegenhaltungen:
- EP-A1- 1 519 042
- EP-A2- 1 672 215
- DE-A1-102007 048 316
- DE-A1-102008 046 168
- US-B1- 7 799 221
- US-B1- 7 988 428

## Beschreibung

Die Erfindung betrifft eine Umkehrosmose-Anlage enthaltend einen aktiven Druckintensivierer, der eine Doppel-Differential-Kolbenpumpe nach Bauart einer Schrägscheibenpumpe mit einem Gehäuse enthält, in dem eine über eine Antriebswelle zur Rotation angetriebene Trommel mit mindestens zwei Kolbenkammern angeordnet ist, wobei die Kolbenkammern jeweils Ein- und Auslässe für einen Einspeisevolumenstrom sowie Ein- und Auslässe für einen Konzentratvolumenstrom aufweisen und in den Kolbenkammern jeweils ein Kolben angeordnet ist, dadurch gekennzeichnet, dass die Pumpe zwei Schrägscheiben als mechanische Antriebsvorrichtungen aufweist, wobei jeder Kolben auf beiden Seiten jeweils eine Kolbenstange mit unterschiedlichen Durchmessern aufweist, die an den Schrägscheiben nicht fixiert, sondern bewegbar auf den Schrägscheiben gelagert sind, was eine mechanisch initiierte Verschiebung des Kolbens in beiden axialen Richtungen ermöglicht. Ebenso werden erfindungsgemäß ein Verfahren zur Veränderung der Konzentration von gelösten Bestandteilen in flüssigen Lösungen mittels Umkehrosmose bereitgestellt. Verwendung findet der erfindungsgemäße Gegenstand insbesondere in der Meer- und Brackwasserentsalzung, bei der Abwasserbehandlung, in der Lebensmittelindustrie, der chemischen Industrie und im Bergbau.

Es gibt eine Vielzahl von Hochdruckanwendungen, bei denen eine Energierückgewinnung aus der potentiellen Energie eines Teilvolumenstroms sinnvoll erscheint. In den Bereichen Umkehrosmose, Bergbau und der chemischen Prozesstechnik wird so etwas teilweise realisiert. Für alle diese Anwendungen ist die Erfindung möglicherweise einsetzbar. Das Grundprinzip wird am Beispiel des Umkehrosmoseprozesses zur Meerwasserentsalzung erklärt.

Allgemein wird bei derartigen Anlagen Meer-, Brack- oder versalztes Brunnenwasser als sog. Feed oder Einspeisung bei Überdruck oberhalb des osmotischen Druckes in ein oder mehrere Membranmodule gepresst. Der Einspeisevolumenstrom wird innerhalb dieser Membranmodule in zwei Teilvolumenströme, bestehend aus Permeatvolumenstrom und Konzentratvolumenstrom, geteilt.

Der Permeatvolumenstrom tritt quasi drucklos aus der Membran aus und stellt, im Falle der Meerwasserentsalzung, das später als Süßwasser verwendbare Produkt des Prozesses dar. Bei anderen Umkehrosmoseprozessen, bei denen es beispielsweise um die Eindickung von Fruchtsäften geht, bildet der Konzentratmassenstrom den gewünschten Produktmassenstrom. Das Verhältnis von Permeatvolumenstrom zu Einspeisevolumenstrom wird dabei als Ausbeuterate definiert. Im Konzentratvolumenstrom, bei der Meerwasserentsalzung aus aufkonzentriertem Salzwasser bestehend, ist auf Grund seines Überdruckes potentielle Energie gespeichert. Die Nutzung dieses Überdruckes bildet den Ansatz für alle bekannten Systeme der Energierückgewinnung in Umkehrosmoseanlagen. Die Energierückgewinnung kann grundsätzlich auf zwei Arten erfolgen: Durch die Umwandlung oder die direkte Übertragung des Konzentratdruckes. Im Falle der Druckübertragung gibt es die Möglichkeiten des isobaren oder des druckintensivierenden Austausches.

Bei der Umwandlung des Konzentratdruckes kann die im Überdruck des Konzentrates gespeicherte Energie mit Hilfe von Strömungs- oder Verdrängermaschinen in mechanische Energie umgewandelt und anschließend unterstützend zum Druckaufbau am Eingang des Prozesses verwendet werden. Im Falle von Verdrängermaschinen ist die Ausbeuterate durch die Hub- und Schluckvolumina von Pumpe und Motor festgelegt. Beispiel hierfür ist eine Kombination aus Axialkolbenpumpe und -motor. Pumpe und Motor sind über eine Welle miteinander verbunden, wodurch ein mittig angeordneter Elektromotor beim Antrieb der Pumpe entlastet wird. Strömungsmaschinen hingegen lassen zwar generell eine variable Ausbeuterate in Abhängigkeit einer Anlagenkennlinie zu, können jedoch auf Grund ihrer kinematischen Eigenschaften nur in Umkehrosmoseanlagen größerer Bauart effizient eingesetzt werden.

Bei der Umwandlung der im Konzentratdruck gespeicherten Energie zur mechanischen Entlastung der Feedpumpe ergeben sich wenige Verbesserungsmöglichkeiten, da die Bauteile bereits strömungstechnisch optimiert sind und der einzige Ansatz in der Verringerung von mechanischen Verlustfaktoren läge. Das Potential wird jedoch als gering eingeschätzt.

Alternativ zur Energieumwandlung kann der Konzentratdruck auch direkt auf den Einspeisevolumenstrom übertragen werden. Diese beiden Volumenströme dürfen sich während der Druckübertragung jedoch nicht nennenswert vermischen, da sonst aufgrund der erhöhten Salzkonzentration im Feed dessen osmotischer Druck und letztendlich auch der erforderliche Anlagendruck steigen würden. Aus diesem Grund wird in den meisten Systemen ein Kolbenzylinder für den Druckaustausch verwendet, wodurch die Volumina mit unterschiedlicher Stoffkonzentration räumlich getrennt werden.

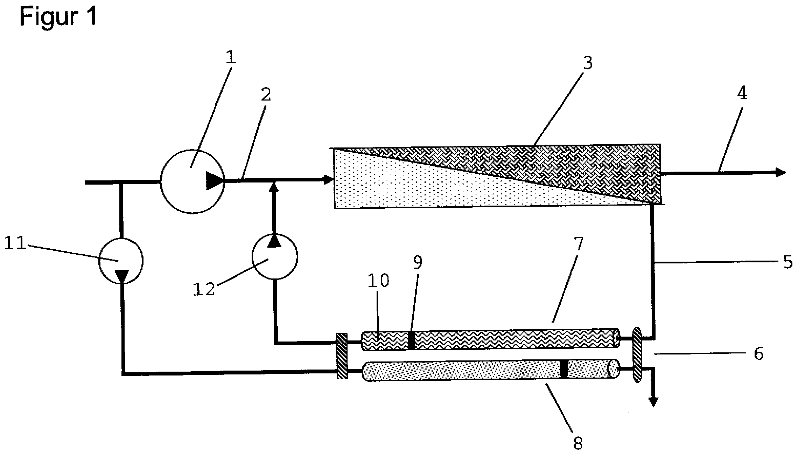

Sind die Druckangriffsflächen auf beiden Seiten des Kolbens identisch, zum Beispiel im Fall von Druckaustauscherrohren mit stangenlosen Kolben, so spricht man von einem isobaren Druckaustausch. Hier wird der Druck ohne hydraulische Übersetzung vom Konzentrat an einen Teil des Feed weitergeben. Anlagen solcher Bauart werden im Zusammenspiel aus einer Hochdruckpumpe (HPP) und einer Rezirkulationspumpe (RCP) betrieben. Fig. 1 zeigt eine Anlage nach diesem Schema. Eine HPP 1 presst Feed 2 in Richtung eines oder mehrerer Membranmodule 3, indem eine Auftrennung des Volumenstroms in den Permeatvolumenstrom 4 und den Konzentratvolumenstrom 5 erfolgt. Das Konzentrat 5 wird anschließend über eine Ventilschaltung 6 in ein erstes von mehreren Druckaustauscherrohren 7, 8 geleitet, in welchem es einen Kolben 9 verdrängt. Auf der anderen Seite dieses Kolbens 9 in diesem ersten Druckaustauscherrohr ist Feed 10 vorgelagert, welches durch die Verdrängung in Richtung des Membranmodules 3 ausgestoßen wird.

Der kontinuierliche Betrieb der Anlage wird durch eine Vielzahl von Rohren gewährleistet, welche intermittierend über eine Ventilschaltung 6 mit Konzentrat beschickt werden. Während ein erstes Rohr mit Konzentrat befüllt wird, muss das nun quasi drucklose Konzentrat aus dem vorherigen Zyklus aus einem zweiten Rohr ausgestoßen und dieses mit frischem Feed für den Folgezyklus gefüllt werden. Dazu wird eine Niederdruck-Befüllpumpe (LPP) 11 benötigt. Beim Umschalten der Ventile kann es zu teilweise starken Druckstößen im System kommen, da der Konzentratvolumenstrom hochdruckseitig kurzzeitig zum Erliegen kommt. Ventilkonzepte, welche dies verhindern, sind sehr aufwändig und nicht in kleinen Baugrößen erhältlich.

Da das Konzentrat durch Reibung beim Durchlaufen des Prozesses an Druck verloren hat, muss dieser Druckverlust vor Wiedereinspeisung des Feed in den Volumenstrom aus der HPP 1 durch eine RCP 12 ausgeglichen werden, da sich sonst kein Kreislauf aufrecht erhalten lassen würde. Die RCP 12 stellt einen unverhältnismäßigen Kostenfaktor dar, denn Gehäuse und Dichtungselemente müssen auf einen hohen Druck ausgelegt sein, obgleich nur eine geringe Leistung am Rezirkulationsstrom verrichtet werden muss. Dies führt zu einem Nischenprodukt, was die Anschaffungskosten erhöht.

Durch die separate Steuerung von HPP 1 und RCP 12 lassen sich beim Energierückgewinnungskonzept des isobaren Druckaustausches gezielt die Volumenströme von Feed und Konzentrat steuern. Dadurch bietet sich der große Vorteil einer variablen Ausbeuterate. Besonders bei schwankendem Salzgehalt des Feed sowie bei schwankendem Energieangebot wird dies interessant, da sich durch die variable Ausbeuterate beliebig viele Anlagenbetriebspunkte ansteuern lassen. Somit kann jederzeit ein energetisches Optimum des Entsalzungsprozesses erreicht werden. Auf Grund des relativ komplexen Aufbaus solcher Anlagen kommt dieses Konzept bisher meist nur in Großanlagen zur Anwendung.

Sind die Druckangriffsflächen auf den beiden Seiten eines Kolbens nicht identisch, so kommt es durch eine hydraulische Übersetzung zu einer Druckänderung über den Kolben. Der Kolben wird zusammen durch eine Pumpe und den Konzentratdruck verfahren.

Dies stellt den Ansatz der sogenannten Druckintensivierung dar und führt zu kleinen, kompakten und bezüglich des Anlagenaufbaus einfacheren Systemen. Die Förderung des Feed sowie die Energierückgewinnung können in einem einzigen Bauteil erfolgen. Analog zu den Verdrängermaschinen bei der Energieumwandlung ist das Verhältnis der Volumenströme von Feed und Konzentrat, und somit die Ausbeuterate, bei Druckintensivierern jedoch immer konstruktiv festgelegt. Bei konstanten Betriebsbedingungen stellt dies keinen Nachteil dar, denn die Anlage kann für den Nennbetriebspunkt dementsprechend ausgelegt werden. Im Hinblick auf variable Betriebsbedingungen lassen sich derartige Systeme jedoch kaum anpassen.

verdeutlichend muss zudem gesagt werden, dass beim bisherigen intensivierenden Druckaustausch die bloße Intensivierung des Ausgangsdruckes einer vorgeschalteten Pumpe durch die Unterstützung des Konzentratdruckes erreicht wird oder ein antreibender Motor entlastet wird. Durch die hydraulische Übersetzung von Kolbenringfläche zu Kolbenfläche als solche verringert sich hingegen de facto sogar der vom Konzentrat auf den Feed übertragene Druck, da die Druckangriffsfläche auf Seiten des Feed größer als auf Seiten des Konzentrates ist.

Ein System ist aus der US 7,799,221 B1 bekannt. Dieses beruht auf dem Prinzip der Übertragung des Konzentratdruckes auf den Feed. Dies wird hierbei durch eine Schrägscheiben-Axialkolbenpumpe (alternative Ausführungen als Schrägachsen oder Taumelscheibe) realisiert.

Im Gegensatz zu bekannten Pumpen dieser Bauart werden keine Fingerkolben, sondern Kolben und Kolbenstange mit unterschiedlichen Querschnitten verwendet. Die Pumpe ist relativ einfach aufgebaut, da sie aus wenigen sich bewegenden Bauteilen besteht. Zwei gegenüberliegende axial fluchtende Endplatten sind über ein Gehäuse miteinander verbunden, in welchem eine Trommel (angetrieben durch einen Elektromotor) mit einer Vielzahl an axial über den Querschnitt verteilten Kolbenkammern rotiert.

Auf der Seite der Kolbenflächen befindet sich die Endplatte, welche den Ein- und Auslass des Feeds ermöglicht. Auf der Seite der Kolbenringflächen befindet sich die Endplatte, welche den Ein- und Auslass des Konzentrates ermöglicht. Die Enden der Kolbenstangen sind mit Füßen versehen, welche über eine feststehende Schrägscheibe gleiten. Das unter Überdruck stehende Konzentrat wird auf die Kolbenringfläche eines Zylinders geleitet. Der Feed ist zu diesem Zeitpunkt bereits auf der Seite der Kolbenfläche vorgelagert. Der Elektromotor, welcher die Kolben mittels der Schrägung der feststehenden Schrägscheibe antreibt, wird folglich durch den Konzentratdruck entlastet.

In Abhängigkeit des Drehwinkels der Trommel werden die Kolben entweder vorgefahren, wobei unter Druck stehendes Konzentrat auf die Kolbenringfläche geleitet wird und der vorgelagerte Feed in Richtung Membranmodul ausgestoßen wird, oder zurückzufahren, wobei neuer Feed vorgelagert und das quasi drucklose Konzentrat ausgeworfen wird. Da die Kolbenstangen nicht fest mit der Schrägscheibe verbunden sind, muss der Feed beim Zulauf unter leichtem Überdruck stehen, sodass der Kolben zurückgefahren und das Konzentrat ausgestoßen werden kann. Somit wird eine weitere (nur indirekt in diesem Konzept erwähnte) Befüll-Pumpe benötig. Andernfalls würden die Kolben in vorderer Position verbleiben.

Auffällig an diesem System ist, dass die Lenkung der Volumenströme ohne Ventilschaltungen möglich ist. Über die Flächen der Endplatten sind radiale Durchlässe angeordnet, welche strömungstechnisch optimierte Querschnitte haben. Konzentratseitig werden bogenförmige Länglöcher eingesetzt, so dass der Zulauf in eine Kolbenkammer allmählich freigegeben und verschlossen wird, während in einer nachfolgenden Kolbenkammer bereits die Befüllung mit Konzentrat beginnen kann. Dadurch lassen sich Druckstöße im Betrieb idealerweise vermeiden.

Ein vorheriger Ansatz des Fraunhofer-Institutes für Solare Energiesysteme, einen kompakten Anlagenaufbau mit der Möglichkeit einer variablen Ausbeuterate zu vereinen, ist aus der Offenlegungsschrift DE 10 2009 020 932 A1 bekannt. Große Antriebskräfte und ungewöhnliche Abmessungen des benötigten Halbzeuges jedoch stellen eine Umsetzung in Frage.

Ausgehend hiervon war es Aufgabe der vorliegenden Erfindung, eine Umkehrosmose-Anlage bereitzustellen, welche aus üblichen Halbzeugen besteht und trotz eines kompakten Systems zur Energierückgewinnung ohne RCP, Befüllpumpe und Druckaustauscherrohre eine variable Ausbeuterate ermöglicht
Diese Aufgabe wird durch die Umkehrosmose-Anlage mit den Merkmalen des Anspruchs 1 und das Verfahren zur Aufkonzentrierung von gelösten Bestandteilen in flüssigen Lösungen mittels Umkehrosmose mit den Merkmalen des Anspruchs 6 gelöst. In Anspruch 11 werden erfindungsgemäße Verwendungen angegeben. Die weiteren abhängigen Ansprüche zeigen vorteilhafte Weiterbildungen auf.

Es wird ein aktiver Druckintensivierer offenbart, der eine Axialkolbenpumpe mit einem Gehäuse enthält, in dem eine über eine Antriebswelle zur Rotation angetriebene Trommel mit mindestens zwei Kolbenkammern angeordnet ist, wobei die Kolbenkammern jeweils einen Flüssigkeitseinlass und einen Flüssigkeitsauslass aufweisen und in den Kolbenkammern jeweils ein Kolben mit mindestens einer Kolbenstange angeordnet ist.

Das Konzentrat besitzt eine größere Druckangriffsfläche als der gegenüberliegende Feed, wodurch die tatsächliche Intensivierung des Konzentratdruckes beim Druckaustausch realisiert wird. Dadurch kann der Kolben prinzipiell ohne zusätzliche Antriebsleistung den Feed trotz des niedrigeren Druckniveaus des Konzentrates gegenüber dem Feed in Richtung mindestens eines Umkehrosmose-Membranmodules verdrängen. Durch die direkte Steuerung der Drehzahl des aktiven Druckintensivierers lässt sich eine gewünschte Ausbeuterate einstellen.

Der aktive Druckintensivierer zeichnet sich dadurch aus, dass die Kolbenstangen jeweils mit mindestens einer mechanischen Vorrichtung verbunden sind, die eine mechanisch initiierte Verschiebung des Kolbens in beiden axialen Richtungen ermöglicht.

Das offenbarte Konzept basiert auf der Umsetzung des Prinzips der aktiven Druckintensivierung in Bauform einer Axialkolbenpumpe.

Vorzugsweise ist die Axialkolbenpumpe eine Schrägscheibenpumpe, eine Schrägachsenpumpe oder einer Taumelscheibenpumpe.

Die mechanische Vorrichtung ist bevorzugt eine mechanische Antriebsvorrichtung, besonders bevorzugt eine Schrägscheibe, wobei die Enden der Kolbenstangen über eine Läuferscheibe auf die Schrägscheibe gedrückt werden.

Eine andere bevorzugte Ausführungsform sieht vor, dass die Axialkolbenpumpe eine Schrägscheiben-Axial-Doppeldifferential-Pumpe ist. Dabei weist die Axialkolbenpumpe vorzugsweise zwei Schrägscheiben als mechanische Antriebsvorrichtungen auf, wobei jeder Kolben auf beiden Seiten jeweils eine Kolbenstange mit unterschiedlichem Durchmesser aufweist, die an den Schrägscheiben nicht fixiert, sondern bewegbar auf der Schrägscheibe gelagert sind, wobei auf eine Läuferscheibe zum Andrücken der Enden der Kolbenstangen auf die Schrägscheiben verzichtet werden kann.

Es ergibt sich, neben der tatsächlichen Druckintensivierung des Konzentratdruckes, dadurch ein wesentlicher Unterschied zur X-Pump gemäß US 7,799,221 B1, wie ein Verbleiben der Kolben in einer Endlage verhindert wird. Bei der X-Pump geschieht dies mittels einer Befüllpumpe, welche die Kolben immer wieder in eine Ausgangsposition zurückkehren lässt. Beim aktiven Druckintensivierer werden die Kolbenstangen axial über eine Läuferscheibe mit der Schrägscheibe verbunden und dadurch immer wieder zurückgezogen oder, bei Ausführung gemäß einer Schrägscheiben-Axial-Doppeldifferential-Pumpe, ständig durch jeweils eine der beiden Schrägscheiben weggedrückt.

Erfindungsgemäß wird eine Umkehrosmose-Anlage bereitgestellt, die einen aktiven Druckintensivierer aufweist. Der aktive Druckintensivierer enthält eine Doppel-Differential-Kolbenpumpe nach Bauart einer Schrägscheibenpumpe mit einem Gehäuse, in dem eine über eine Antriebswelle zur Rotation angetriebene Trommel mit mindestens zwei Kolbenkammern angeordnet ist, wobei die Kolbenkammern jeweils Ein- und Auslässe für einen Einspeisevolumenstrom sowie Ein- und Auslässe für einen Konzentratvolumenstrom aufweisen und in den Kolbenkammern jeweils ein Kolben angeordnet ist, dadurch gekennzeichnet, dass die Pumpe zwei Schrägscheiben als mechanische Antriebsvorrichtungen aufweist, wobei jeder Kolben auf beiden Seiten jeweils eine Kolbenstange mit unterschiedlichen Durchmessern aufweist, die an den Schrägscheiben nicht fixiert, sondern bewegbar auf den Schrägscheiben gelagert sind, was eine mechanisch initiierte Verschiebung des Kolbens in beiden axialen Richtungen ermöglicht.

Vorzugsweise weist die Umkehrosmose-Anlage mindestens ein Umkehrosmose-Membranmodul zur Auftrennung eines Einspeisevolumenstroms in einen Permeatvolumenstrom und einen Konzentratvolumenstrom sowie Leitungen für Einspeise-, Permeat- und Konzentratvolumenstrom auf.

Die Umkehrosmose-Anlage weist vorzugsweise weiterhin eine Hochdruckpumpe auf. Hierbei ist es besonders vorteilhaft, dass die Umkehrosmose-Anlage keine Rezirkulationspumpen oder Niederdruck-Befüllpumpen erfordert.

Erfindungsgemäß wird ebenso ein Verfahren zur Veränderung der Konzentration von gelösten Bestandteilen in flüssigen Lösungen mittels Umkehrosmose bereitgestellt, bei dem
a) ein Einspeisevolumenstrom über eine Hochdruckpumpe in mindestens ein Umkehrosmose-Membranmodul transportiert wird, in dem durch die Umkehrosmose-Membran eine Auftrennung des Einspeisevolumenstroms in einen Permeatvolumenstrom mit einer geringeren Konzentration des gelösten Bestandteils und einen mit den gelösten Bestandteilen angereicherten Konzentratvolumenstrom erfolgt,
b) der Konzentratvolumenstrom und ein Teil des Einspeisevolumenstroms einem aktiven Druckintensivierer zugeführt wird, wobei der aktive Druckintensivierer eine Doppel-Differential-Kolbenpumpe nach Bauart einer Schrägscheibenpumpe mit einem Gehäuse enthält, wobei in dem Gehäuse eine über eine Antriebswelle zur Rotation angetriebene Trommel mit mindestens zwei Kolbenkammern angeordnet ist und die Kolbenkammern jeweils Ein- und Auslässe für einen Einspeisevolumenstrom sowie Ein- und Auslässe für einen Konzentratvolumenstrom aufweisen und in den Kolbenkammern jeweils ein Kolben angeordnet ist, dadurch gekennzeichnet, dass die Pumpe zwei Schrägscheiben als mechanische Antriebsvorrichtungen aufweist, wobei jeder Kolben auf beiden Seiten jeweils eine Kolbenstange mit unterschiedlichen Durchmessern aufweist, die an den Schrägscheiben nicht fixiert, sondern bewegbar auf den Schrägscheiben gelagert sind, was eine mechanisch initiierte Verschiebung des Kolbens in beiden axialen Richtungen ermöglicht und
c) der aus dem aktiven Druckintensivierer tretende Einspeisevolumenstrom dem Umkehrosmose-Membranmodul zusammen mit dem Einspeisevolumenstrom einer Hochdruckpumpe zugeführt wird, wobei der im aktiven Druckintensivierer aufgenommene Konzentratvolumenstrom die Umkehrosmose-Anlage unterhalb des Anlagendruckes verlässt.

Vorzugsweise wird die aufgrund des erhöhten Drucks im Konzentratvolumenstrom gespeicherte potentielle Energie für den intensivierenden Druckaustausch im System genutzt und damit teilweise zurückgewonnen.

Es ist weiter bevorzugt, dass unterhalb eines bestimmten Betriebspunktes der Umkehrosmose-Anlage der Kolben über die hydraulische Übersetzung bewegt wird. Oberhalb eines bestimmten Betriebspunktes treibt vorzugsweise ein Motor die Antriebswelle an, wodurch das Verhältnis von Permeatvolumenstrom zu Einspeisevolumenstrom aktiv beeinflusst wird.

Eine bevorzugte Variante des erfindungsgemäßen Verfahrens sieht vor, dass die Konzentration der gelösten Bestandteilen in flüssigen Lösungen verringert wird. Beispiele hierfür sind die Wasseraufbereitung oder Meerwasserentsalzung. Hierbei stellt dann der Permeatstrom das Produkt dar.

Eine andere bevorzugte Variante des erfindungsgemäßen Verfahrens sieht vor, dass die Konzentration der gelösten Bestandteilen in flüssigen Lösungen erhöht wird. Ein Beispiel hierfür ist die Eindickung von Fruchtsäften. Bei dieser Variante stellt der Konzentratstrom das Produkt dar.

Der Einsatz einer solchen Anlage wird überwiegend in der Meer- oder Brackwasserentsalzung gesehen. Die Anlagengröße spielt dabei eine untergeordnete Rolle, da sich das vorgestellte Prinzip beliebig skalieren und somit den jeweiligen Anforderungen und Gegebenheiten anpassen lässt. Dies könnten sowohl netzbetriebene als auch photovoltaisch betriebene UmkehrosmoseAnlagen sein, da der Prozess sehr flexibel einem schwankenden Energieangebot angepasst werden kann. Auch manuell betriebene Entsalzer sind denkbar.

Weitere Anwendungen betreffen die Abwasserbehandlung, z.B. in der Lebensmittelindustrie, der chemischen Industrie und im Bergbau.

Anhand der nachfolgenden Figuren soll der erfindungsgemäße Gegenstand näher erläutert werden, ohne diesen auf die hier gezeigten speziellen Ausführungsformen einschränken zu wollen.
Fig. 1 zeigt anhand einer schematischen Darstellung den Verfahrensablauf in einer Umkehrosmose-Anlage basierend auf einem isobaren Druckaustausch.
Fig. 2 zeigt das Schaltbild einer Umkehrosmose-Anlage mit einem aktiven Druckintensivierer nach Ausführung als Schrägscheiben-Axialkolbenpumpe.
Fig. 3 zeigt den Aufbau eines aktiven Druckintensivierers in der Ausführung als Schrägscheiben-Axialkolbenpumpe.
Fig. 4 zeigt den Aufbau eines aktiven Druckintensivierers in der Ausführung als Schrägscheiben-Axial-Doppeldifferential-Kolbenpumpe.

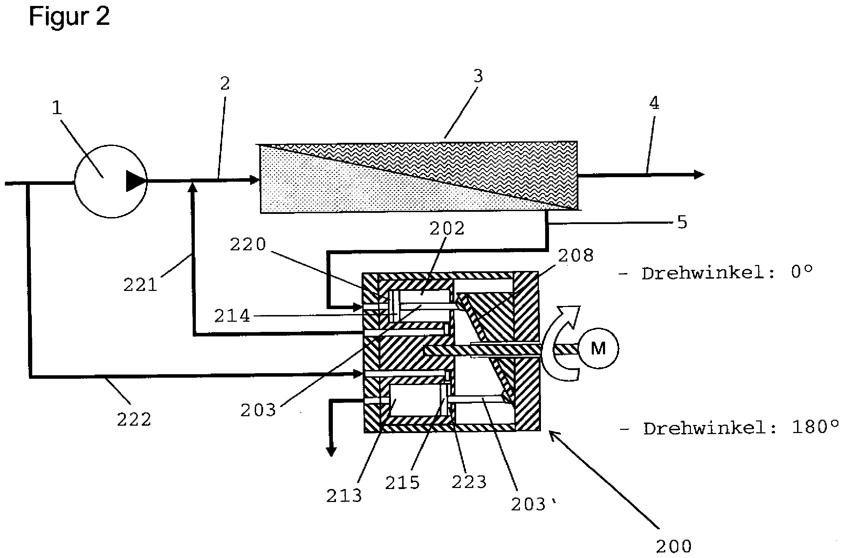

Das System in Fig. 2 basiert auf der Umsetzung des Prinzips der aktiven Druckintensivierung in Bauform einer Axialkolbenpumpe 200. Das Konzentrat 5 tritt in die Kolbenkammer 220, während Feed aus der Kolbenringkammer 202 ausgestoßen wird. Durch die Anpassung der Durchmesser der Kolbenstangen 203, 203' kann die hydraulische Übersetzung über den Kolben 214, 215 grundsätzlich an den Druckverluste einer beliebigen Anlage in einem beliebigen bevorzugten Betriebspunkt (Nennbetriebspunkt) angeglichen werden.

Wie zu erkennen ist, wird das Konzentrat 5 in die oberste mehrerer Kolbenkammern 220 geleitet (Drehwinkel 0° bis 180°), während der Kolben 214 sowie die Kolbenstange 203 beginnen zurückzufahren. Aus der Kolbenringkammer 202 wird dabei ein Rezirkulationsstrom 221 in Richtung mindestens einer Umkehrosmose-Membran 3 verdrängt. Die untere Kolbenkammer 213 hat während der vorherigen Rotation (Drehwinkel 0° bis 180°) bereits Konzentrat 5 aufgenommen und wirft dieses während der folgenden Rotation (Drehwinkel 180° bis 0°) aus, wodurch neuer quasi druckloser Feed 222 durch das Wegdrücken des Kolbens 215 von der Schrägscheibe 208 in die Kolbenringkammer 223 eingesogen wird. Die Ausbeuterate kann jederzeit einfach über die Regelung der Drehzahlen von HPP und rotierendem Druckintensivierer beeinflusst werden. Da es sich beim rotierenden Druckintensivierer um eine Verdrängermaschine handelt, kann der Konzentratvolumenstrom (und somit auch die Ausbeuterate) gezielter beeinflusst werden als durch eine Strömungsmaschine als RCP.

Unterhalb eines Nennbetriebspunktes ist die hydraulische Übersetzung über den Kolben ausreichend, um diesen durch die Druckkraft des Konzentrates zu verfahren und somit Feed unter Überdruck in Richtung mindestens einer Membran zu verdrängen. Der Auswurf von drucklosem Konzentrat sowie die Wiederbefüllung mit Feed erfolgen allein über die Schrägscheibe, da der Kolben während der Rotation von dieser vorgefahren wird.

Mit zunehmenden Volumenströmen und Druckverlusten in höheren Betriebspunkten wird ein zusätzlicher Antrieb des aktiven Druckintensivierers notwendig, da der Kolben nun (neben der hydraulischen Übersetzung) zusätzlich durch ein aktives Verfahren zum Druckaufbau in der Kolbenringkammer beitragen muss.

Die Problematik der Druckstöße während des Umschaltens entfällt durch die strömungstechnisch optimierten Ein- und Auslässe an einer oder beiden Endplatten, da immer mindestens eine Kolbenkammer kontinuierlich mit Konzentrat beschickt werden kann, während ebenfalls kontinuierlich Feed in Richtung der Membranmodule verdrängt wird. Es kommt sowohl eine Axialkolbenpumpe nach Bauart einer Schrägscheiben-, einer Schrägachsen- als auch einer Taumelscheibenmaschine in Frage.

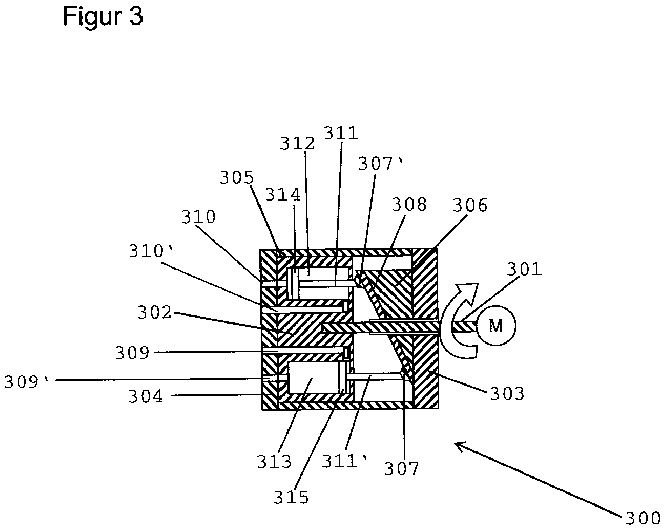

In Fig. 3 ist die Bauart einer Schrägscheibenmaschine 300 dargestellt. Die Antriebswelle 301 wird durch einen Motor in der gewünschten Drehzahl rotiert. Die Antriebswelle 301 ist fest mit der Trommel 302 verbunden. Dadurch lässt sich die Förderleistung des rotierenden Druckintensivierers regulieren. Die Trommel 302 umgeben die feststehenden Positionen der hinteren Endplatte 303, der vorderen Endplatte 304 sowie des Gehäuses 305. Die Schrägscheibe 306 ist fest mit der hinteren Endplatte 303 verbunden und dreht sich demnach nicht mit der Trommel 302. Die Gelenkfüße 307, 307' verbinden die Kolbenstangen 311, 311' mit der Läuferscheibe 308. Die Läuferscheibe 308 kann auf der Schrägscheibe 306 um ihre schräge Längsachse in Abhängigkeit der Drehzahl der Trommel 302 rotieren, sich jedoch axial nicht von der Schrägscheibe 306 abheben oder radial auf dieser verrutschen. Alternativ hierzu kann die Läuferscheibe 308 auch fest mit der Schrägscheibe 306 verbunden sein und die auf oder unter ihr gleitenden Gelenkfüße 307, 307' mittels einer mechanischen Führung am Abheben von der Schrägscheibe hindern.

Die Ein- und Auslässe für Einspeisevolumenstrom 309, 310' und Konzentratvolumenstrom 310, 309' können die Trommel 302, die vordere Endplatte 304, die hintere Endplatte 303, sowie das Gehäuse 305 in beliebiger Kombination durchlaufen.

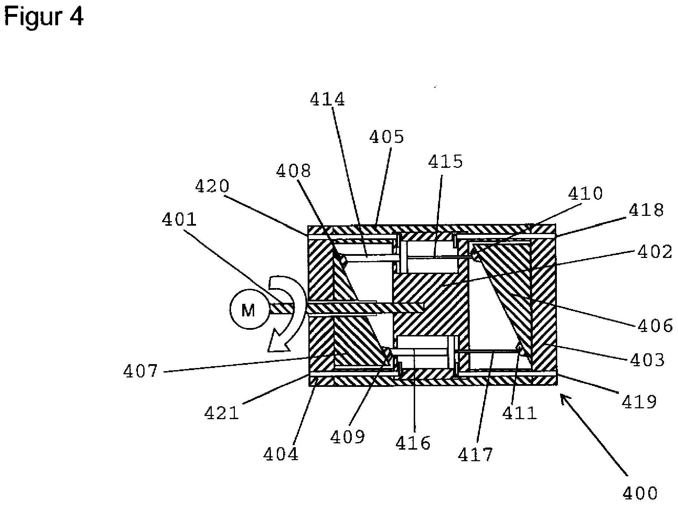

In Fig. 4 ist die Bauart einer Schrägscheiben-Axial-Doppeldifferential-Kolbenpumpe 400 dargestellt. Die Antriebswelle 401 wird durch den Motor in der gewünschten Drehzahl rotiert. Die Antriebswelle 401 ist fest mit der Trommel 402 verbunden, wodurch sich die Förderleistung des rotierenden Druckintensivierers regulieren lässt. Die Trommel 402 umgeben die feststehenden Positionen der hinteren Endplatte 403, der vorderen Endplatte 404 sowie des Gehäuses 405. Die Schrägscheibe 406 ist fest mit der hinteren Endplatte 403 verbunden und die Schrägscheibe 407 ist fest mit der vorderen Endplatte 404 verbunden. Beide Schrägscheiben drehen sich demnach nicht mit der Trommel 402. Die Kolbenstangen 414, 416 besitzen einen größeren Durchmesser als die Kolbenstangen 415, 417. Die Kolbenstangen 414, 416 sind über die Gelenkfüße 408, 409 auf der Schrägscheibe 407 und die Kolbenstangen 415, 417 über die Gelenkfüße 410, 411 auf der Schrägscheibe 406 gelagert. In dieser Ausführung kann auf die im vorherigen Entwurf nach Fig. 2 und Fig. 3 benötigte Läuferscheibe verzichtet werden, da die Kolbenstangen und Kolben auch ohne diese immer durch eine der beiden Schrägscheiben 406, 407 innerhalb der Trommel 402 verfahren werden und nicht in einer Endlage den Kontakt zum Antriebsmechanismus verlieren können.

Auch bei dieser Ausführung können die Aus- und Einlässe für Feed 421, 420 und Konzentrat 419, 418 die Trommel 402, die vordere Endplatte 404, die hintere Endplatte 403, sowie das Gehäuse 405 in beliebiger Kombination durchlaufen.

## Patentansprüche

1. Umkehrosmose-Anlage, enthaltend einen aktiven Druckintensivierer, enthaltend eine Doppel-Differential-Kolbenpumpe (400) nach Bauart einer Schrägscheibenpumpe mit einem Gehäuse (405), in dem eine über eine Antriebswelle zur Rotation angetriebene Trommel (402) mit mindestens zwei Kolbenkammern angeordnet ist,
wobei die Kolbenkammern jeweils Ein- und Auslässe für einen Einspeisevolumenstrom sowie Ein- und Auslässe für einen Konzentratvolumenstrom aufweisen und in den Kolbenkammern jeweils ein Kolben angeordnet ist,
**dadurch gekennzeichnet, dass** die Pumpe (400) zwei Schrägscheiben (406, 407) als mechanische Antriebsvorrichtungen aufweist, wobei jeder Kolben auf beiden Seiten jeweils eine Kolbenstange (414, 415, 416, 417) mit unterschiedlichen Durchmessern aufweist, die an den Schrägscheiben (406, 407) nicht fixiert, sondern bewegbar auf den Schrägscheiben (406, 407) gelagert sind, was eine mechanisch initiierte Verschiebung des Kolbens in beiden axialen Richtungen ermöglicht.

2. Umkehrosmose-Anlage nach einem der vorhergehenden Ansprüche, **dadurch gekennzeichnet, dass** die Kolbenstangen (414, 415, 416, 417) über eine Läuferscheibe mit der Schrägscheibe (406, 407) verbunden sein können, wobei auf die Läuferscheibe verzichtet werden kann.

3. Umkehrosmose-Anlage nach einem der vorhergehenden Ansprüche, **dadurch gekennzeichnet, dass** die Schrägscheibe (406, 407) an einer Endplatte (403) fixiert ist.

4. Umkehrosmose-Anlage nach einem der Ansprüche 1 bis 3,
**dadurch gekennzeichnet, dass** die Umkehrosmose-Anlage mindestens ein Umkehrosmose-Membranmodul zur Auftrennung eines Einspeisevolumenstroms in einen Permeatvolumenstrom und einen Konzentratvolumenstrom sowie Leitungen für Einspeise-, Permeat- und Konzentratvolumenstrom aufweist.

5. Umkehrosmose-Anlage nach einem der Ansprüche 1 bis 4, **dadurch gekennzeichnet, dass** die Umkehrosmose-Anlage mindestens eine Hochdruckpumpe aufweist, wobei die Umkehrosmose-Anlage keine Rezirkulationspumpen oder Niederdruck-Befüllpumpen benötigt.

6. Verfahren zur Veränderung der Konzentration von gelösten Bestandteilen in flüssigen Lösungen mittels Umkehrosmose, bei dem
a) ein Einspeisevolumenstrom über eine Hochdruckpumpe in mindestens ein Umkehrosmose-Membranmodul transportiert wird, in dem durch die Umkehrosmose-Membran eine Auftrennung des Einspeisevolumenstroms in einen Permeatvolumenstrom mit einer geringeren Konzentration des gelösten Bestandteils und einen mit den gelösten Bestandteilen angereicherten Konzentratvolumenstrom erfolgt,
b) der Konzentratvolumenstrom und ein Teil des Einspeisevolumenstroms einem aktiven Druckintensivierer zugeführt wird, wobei der aktive Druckintensivierer eine Doppel-Differential-Kolbenpumpe (400) nach Bauart einer Schrägscheibenpumpe mit einem Gehäuse (405) enthält, wobei in dem Gehäuse eine über eine Antriebswelle zur Rotation angetriebene Trommel (402) mit mindestens zwei Kolbenkammern angeordnet ist und die Kolbenkammern jeweils Ein- und Auslässe für einen Einspeisevolumenstrom sowie Ein- und Auslässe für einen Konzentratvolumenstrom aufweisen und in den Kolbenkammern jeweils ein Kolben angeordnet ist, wobei die Pumpe (400) zwei Schrägscheiben (406, 407) als mechanische Antriebsvorrichtungen aufweist und wobei jeder Kolben auf beiden Seiten jeweils eine Kolbenstange (414, 415, 416, 417) mit unterschiedlichen Durchmessern aufweist, die an den Schrägscheiben (406, 407) nicht fixiert, sondern bewegbar auf den Schrägscheiben (406, 407) gelagert sind, was eine mechanisch initiierte Verschiebung des Kolbens in beiden axialen Richtungen ermöglicht und
c) der aus dem aktiven Druckintensivierer tretende Einspeisevolumenstrom dem Umkehrosmose-Membranmodul zusammen mit dem Einspeisevolumen-strom einer Hochdruckpumpe zugeführt wird, wobei der im aktiven Druckintensivierer aufgenommene Konzentratvolumenstrom die Umkehrosmose-Anlage unterhalb des Anlagendruckes verlässt.

7. Verfahren nach Anspruch 6,
**dadurch gekennzeichnet, dass** die aufgrund des, gemessen am Normaldruck, erhöhten Drucks im Konzentratvolumenstrom gespeicherte potentielle Energie für den intensivierenden Druckaustausch im System genutzt und damit teilweise zurückgewonnen wird.

8. Verfahren nach den Ansprüchen 6 oder 7,
**dadurch gekennzeichnet, dass** unterhalb eines bestimmten Betriebspunktes der Umkehrosmose-Anlage der Kolben mittels einer hydraulischen Übersetzung bewegt wird.

9. Verfahren nach einem der Ansprüche 6 bis 8,
**dadurch gekennzeichnet, dass** oberhalb eines bestimmten Betriebspunktes ein Motor die Antriebswelle antreibt, wodurch das Verhältnis von Permeatvolumenstrom zu Einspeisevolumenstrom aktiv beeinflusst wird.

10. Verfahren nach einem der Ansprüche 6 bis 9,
**dadurch gekennzeichnet, dass** die Konzentration der gelösten Bestandteilen in flüssigen Lösungen verringert wird, insbesondere zur Wasseraufbereitung oder Meerwasserentsalzung oder die Konzentration der gelösten Bestandteilen in flüssigen Lösungen erhöht wird, insbesondere zur Eindickung von Fruchtsäften.

11. Verwendung der Umkehrosmose-Anlage nach einem der Ansprüche 1 bis 5 in der Meer- und Brackwasserentsalzung, bei der Abwasserbehandlung, in der Lebensmittelindustrie, der chemischen Industrie und im Bergbau.

## Claims

1. Reverse osmosis plant, comprising an active pressure intensifier, comprising a double differential pump (400) with the configuration of a swash plate pump having a housing (405) in which a drum (402) is disposed which is driven for rotation via a drive shaft and has at least two piston chambers,
wherein the piston chambers respectively have inlets and outlets for a feed volume flow and also inlets and outlets for a concentrate volume flow and, in the piston chambers, respectively, a piston is disposed,
**characterised in that** the pump (400) comprises two swash plates (406, 407) as mechanical drive unit, wherein each piston on both sides has one piston rod (414, 415, 416, 417) with different diameters, respectively, which are not fixed to the swash plates (406, 407), but movably mounted on the swash plates (406, 407), which enables a mechanically initiated displacement of the piston in both axial directions.

2. Reverse osmosis plant according to one of the preceding claims, **characterised in that** the piston rods (414, 415, 416, 417) can be connected to the swash plate (406, 407) via a rotor disc, wherein the rotor disc can be dispensed with.

3. Reverse osmosis plant according to one of the preceding claims, **characterised in that** the swash plate (406, 407) is fixed on an end plate (403).

4. Reverse osmosis plant according to one of claims 1 to 3, **characterised in that** the reverse osmosis plant has at least one reverse osmosis membrane module for separating a feed volume flow into a permeate volume flow and a concentrate volume flow and also lines for feed-, permeate- and concentrate volume flow.

5. Reverse osmosis plant according to one of claims 1 to 4, **characterised in that** the reverse osmosis plant has at least one high-pressure pump, wherein the reverse osmosis plant requires no recirculation pumps or low-pressure filling pumps.

6. Method for changing the concentration of dissolved components in liquid solutions by means of reverse osmosis, in which
a) a feed volume flow is transported via a high-pressure pump into at least one reverse osmosis membrane module in which, due to the reverse osmosis membrane, separation of the feed volume flow into a permeate volume flow with a lower concentration of the dissolved component and into a concentrate volume flow which is enriched with the dissolved components is effected,
b) the concentrate volume flow and a part of the feed volume flow is supplied to an active pressure intensifier, wherein the active pressure intensifier comprises a double differential pump (400) with the configuration of a swash plate pump having a housing (405), wherein in the housing, a drum (402) which is driven for rotation via a drive shaft and has at least two piston chambers is disposed and the piston chambers respectively have inlets and outlets for a feed volume flow and also inlets and outlets for a concentrate volume flow and, in the piston chambers, respectively a piston is disposed, wherein the pump (400) comprises two swash plates (406, 407) as mechanical drive unit and wherein each piston on both sides has one piston rod (414, 415, 416, 417) with different diameters, respectively, which are not fixed to the swash plates (406, 407), but movably mounted on the swash plates (406, 407), which enables a mechanically initiated displacement of the piston in both axial directions, and
c) the feed volume flow leaving the active pressure intensifier is supplied to the reverse osmosis membrane module together with the feed volume flow of a high-pressure pump, wherein the concentrate volume flow received in the active pressure intensifier leaves the reverse osmosis plant below the plant pressure.

7. Method according to claim 6, **characterised in that** the potential energy stored in the concentrate volume flow, because of the increased pressure, measured at normal pressure, is used in the system for the intensifying pressure exchange and hence is partially recovered.

8. Method according to claims 6 or 7, **characterised in that**, below a specific operating point of the reverse osmosis plant, the piston is moved by means of a hydraulic transmission.

9. Method according to one of the claims 6 to 8, **characterised in that**, above a specific operating point, a motor drives the drive shaft, as a result of which the ratio of permeate volume flow to feed volume flow is actively influenced.

10. Method according to one of the claims 6 to 9, **characterised in that** the concentration of dissolved components in liquid solutions is reduced, in particular for water treatment or sea water desalination or the concentration of dissolved components in liquid solutions is increased, in particular for concentrating fruit juices.

11. Use of the reverse osmosis plant according to one of the claims 1 to 5 in sea- and brackish water desalination, in waste water treatment, in the foodstuff industry, in the chemical industry and in mining.

## Revendications

1. Installation d'osmose inverse comprenant un intensificateur de pression actif, comprenant une pompe à double piston différentiel (400) sous la forme d'une pompe à disques obliques avec un boîtier (405) dans lequel est disposé un tambour (402) entraîné en rotation par un arbre d'entraînement, avec au moins deux chambres de pistons,
les chambres de pistons comprenant chacune des entrées et sorties pour un flux volumique d'alimentation ainsi que des entrées et sortie pour un flux volumique de concentré et, dans chacune des chambres à pistons est disposé un piston,
**caractérisé en ce que** la pompe (400) comprend deux disques obliques (406, 407) en tant que dispositifs d'entraînement, chaque piston présentant des deux côtés une tige de piston (414, 415, 416, 417) avec des diamètres différents, qui ne se fixent pas sur les disques obliques (406, 407) mais sont logés de manière mobile sur les disques obliques (406, 407), ce qui permet un déplacement mécanique du piston dans les deux directions axiales.

2. Installation d'osmose inverse selon l'une des revendications précédentes, **caractérisée en ce que** les tiges de pistons (414, 415, 416, 417) puissent être reliées par l'intermédiaire d'un disque de rotor avec le disque oblique (406, 407), le disque de rotor n'étant pas indispensable.

3. Installation d'osmose inverse selon l'une des revendications précédentes, **caractérisée en ce que** le disque oblique (406, 407) est fixé à une plaque d'extrémité (403).

4. Installation d'osmose inverse selon l'une des revendications 1 à 3, **caractérisée en ce que** l'installation d'osmose inverse comprend au moins un module à membrane d'osmose inverse, pour la séparation d'un flux volumique d'alimentation en un flux volumique de perméat et un flux volumique de concentré, ainsi que des conduites pour le flux volumique d'alimentation, le flux volumique de perméat et le flux volumique de concentré.

5. Installation d'osmose inverse selon l'une des revendications 1 à 4, **caractérisée en ce que** l'installation d'osmose inverse comprend au moins une pompe à haute pression, l'installation d'osmose inverse ne nécessitant pas de pompes de remise en circulation ni de pompes de remplissage à basse pression.

6. Procédé de modification de la concentration de composants dissous dans des solutions liquides au moyen d'une osmose inverse, dans lequel
a) un flux volumique d'alimentation est transporté, par l'intermédiaire d'une pompe à haute pression, vers au moins un module à membrane d'osmose inverse dans lequel la membrane d'osmose inverse permet une séparation du flux volumique d'alimentation en un flux volumique de perméat avec une concentration plus faible en composant dissous et un flux volumique de concentré enrichi en composant dissous,
b) le flux volumique de concentré et une partie du flux volumique d'alimentation sont introduits dans un intensificateur de pression actif, l'intensificateur de pression actif contenant une pompe à double piston différentiel (400) sous la forme d'une pompe à disques obliques avec un boîtier (405), un tambour (402) avec au moins deux chambres à pistons, entraîné en rotation par un arbre d'entraînement, étant disposé dans le boîtier et les chambres à pistons comprenant chacune des entrées et des sorties pour un flux volumique d'alimentation ainsi que des entrées et sorties pour un flux volumique de concentré et, dans chacune des chambres à pistons est disposé un piston, la pompe (400) comprenant deux disques obliques (406, 407) en tant que dispositifs d'entraînement mécaniques et les pistons comprenant, des deux côtés, des tiges de piston (414, 415, 416, 417) avec des diamètres différents, qui ne sont pas fixées aux disques obliques (406, 407) mais sont logées de manière mobile sur les disques obliques (406, 407), ce qui permet un déplacement mécanique du piston dans les deux directions axiales et
c) le flux volumique d'alimentation sortant de l'intensificateur de pression actif est introduit dans le module à membrane d'osmose inverse conjointement avec le flux volumique d'alimentation d'une pompe à haute pression, le flux volumique de concentré logé dans l'intensificateur de pression actif quittant l'installation d'osmose inverse en dessous de la pression de l'installation.

7. Procédé selon la revendication 6,
**caractérisé en ce que**, du fait de la pression augmentée par rapport à la pression normale, l'énergie potentielle accumulée dans le flux volumique de concentré est utilisée pour l'intensification de l'échange de pression dans le système et donc partiellement récupérée.

8. Procédé selon la revendication 6 ou 7,
**caractérisé en ce que**, en dessous d'un point de fonctionnement déterminé de l'installation d'osmose inverse, le piston est déplacé au moyen d'une multiplication hydraulique.

9. Procédé selon l'une des revendications 6 à 8,
**caractérisé en ce que**, au-dessus d'un point de fonctionnement déterminé, un moteur entraîne l'arbre d'entraînement, ce qui influence activement le rapport entre le flux volumique de perméat et le flux volumique d'alimentation.

10. Procédé selon l'une des revendications 6 à 9,
**caractérisé en ce que** la concentration des composants dissous dans des solutions liquides est réduite, plus particulièrement pour le traitement de l'eau ou la désalinisation de l'eau de mer, ou que la concentration des composants dissous dans des solutions liquides est augmentée, plus particulièrement pour l'épaississement de jus de fruits.

11. Utilisation de l'installation d'osmose inverse selon l'une des revendications 1 à 5 pour la désalinisation d'eau de mer et d'eau saumâtre, dans le traitement des eaux usées, dans l'industrie alimentaire, dans l'industrie chimique et dans l'exploitation minière.
